# EUROPEAN PATENT APPLICATION

(11) **EP 1 760 460 A1**
(43) Date of publication of application: **07.03.2007**
(21) Application number: 05753492.7
(22) Date of filing: 21.06.2005
(51) Int. Cl.: G01N 27/327, G01N 27/416

(54) **SENSOR CHIP AND MANUFACTURING METHOD THEREOF**

(30) Priority: 22.06.2004 JP 2004183954; 22.06.2004 JP 2004184245; 22.06.2004 JP 2004184487
(71) Applicant: Sumitomo Electric Industries, Ltd., Osaka-shi, Osaka 541-0041 (JP); National Institute of Advanced Industrial Science and Technology, Tokyo 100-8921 (JP)
(72) Inventor: HOSOYA, T., Osaka Works of Sumitomo Elect Ind.,Ltd, Osaka-shi, Osaka 5540024 (JP); KAIMORI, S., Osaka Works of Sumitomo Elect Ind Ltd, Osaka-shi, Osaka 5540024 (JP); ICHINO, M., Osaka Works of Sumitomo Elect Ind, Ltd, Osaka-shi, Osaka 5540024 (JP); KARUBE, I., National Inst. Adv. Ind. Sce & Tech, Tsukuba-shi (JP); GOTOH, M., National Inst. of Adv. Ind Sces & Tech, Tsukuba-shi (JP); NAKAMURA, H., National Inst. Adv. Ind. Sce & Tech, Tsukuba-shi (JP); KURUSU, F., National Inst. Adv. Ind. Sce & Tech, Tsukuba-shi (JP); SHIKAWA, T., National Inst. Adv Ind. Sce & Tech, Tsukuba-shi (JP)
(74) Representative: Setna, Rohan P.
(86) International application number: PCT/JP2005/011323
(87) International publication number: WO 2005/124329

(57) **Abstract**

Provided are a sensor chip and a manufacturing method of this sensor chip, that includes a substrate, a cover layer, a spacer layer sandwiched between the substrate and the cover layer, and a hollow reaction section between the substrate and the cover layer, wherein warping due to changes in the environmental temperature and humidity does not occur.

A sensor chip is provided including: a substrate; a cover layer; a spacer layer sandwiched between the substrate and the cover layer; a hollow reaction section provided between the substrate and the cover layer; and a detection section provided in the hollow reaction section, wherein the substrate and the cover layer are made of the same material and have the same thickness, and a material and a shape of the spacer layer are symmetrical with respect to a plane which is parallel to the substrate and located at equal distances from the substrate and from the cover layer, and a manufacturing method of the sensor chip is provided.

## Description

### Technical Field

The present invention relates to a sensor chip, particularly to a biosensor chip, for easily performing a quantitative test and detection of a chemical material contained in a sample. Further, the present invention relates to a manufacturing method of this sensor chip. In addition, the present invention relates to a sensor chip, particularly to a biosensor chip, which is manufactured using the manufacturing method of the present invention.

### Background Art

A biosensor chip is a sensor chip that introduces a trace sample into a reaction section of a chip, makes a biochemical reaction occur for the trace sample, such as an enzyme reaction or an antigen-antibody reaction, and externally outputs information obtained as a result of the biochemical reaction. This biosensor chip employs an excellent molecular recognition function that an organism has, and has drawn attention as a chip enabling rapid and easy measurement of a trace chemical material. For example, the biosensor chip is used in a home health examination (self care), etc., for self-managing and protecting diabetes, as a blood sugar level sensor for measuring glucose amount in blood (blood sugar level), or as a urine sugar level sensor for measuring urine sugar level.

An example of this biosensor chip is described in JP-A-10-2874. This biosensor chip has a structure wherein a sample is drawn by suction through a hole formed in a chip and introduced into a reaction section. This is a laminated biosensor chip wherein a spacer layer having a groove (a hollow reaction section) is arranged on a substrate, and further a cover layer having an air hole is arranged thereon (paragraph 0003). Another example of the lamination type biosensor chip is described in JP-A-11-94790. In this example, a substrate and a cover layer are laminated by using an adhesive layer, and by using the adhesive layer as a spacer layer, it is attempted to simplify the manufacturing process thereof.

Such a lamination type biosensor chip is constituted by laminating a spacer layer serving as a hollow reaction section on a substrate, and laminating a cover layer thereon, with the spacer layer being formed of one or a plurality of spacer members. In this case, the spacer member is a single-layered film constituting a spacer layer. A pressure sensitive adhesive material or an adhesive is employed to adhere the spacer member to the substrate and to the cover layer, and the pressure sensitive adhesive material or the adhesive is also regarded as a single-layered film constituting the spacer layer, that is, a spacer member.

However, according to the above described lamination type biosensor chip, physical characteristic differences and residual strain differences are present between the layers, and because of these differences, the chip tends to warp according to the environmental temperature and humidity change as time elapses. As the chip warps, the external appearance is deteriorated and the value of the product is reduced. There are additional problems such as the volume of the reaction section is changed by the warping, which affects the measurement value adversely, and peeling occurs at the interface of the pressure sensitive adhesive layer, etc. Thus, development is demanded of a biosensor chip wherein a substrate, a spacer layer and a cover layer are laminated and in which such warping does not occur.

Moreover, the biosensor chip described in JP-A-10-2874 or JP-A-11-94790 is constituted by laminating the spacer layer on the substrate, and further laminating the cover layer thereon. By the spacer layer, a hollow reaction section is formed between the substrate and the cover layer. Thereafter, when a sample is introduced into the reaction section, a biochemical reaction, etc., is performed.

For these lamination type biosensor chips, in adhering the substrate or the cover layer to the spacer layer, and in adhering the spacer members to each other which constitute the spacer layer (single-layered film constituting the spacer layer), mainly, a method of adhering by using a double-sided tape to which the pressure sensitive adhesive material is applied, or a method of adhering by applying the pressure sensitive adhesive material to the surface of the spacer member by screen printing, etc. (JP-A-11-94790). A pressure sensitive adhesive material is superior in view of productivity, because adherence is achieved by the application of pressure, and a process such as application of heat or UV irradiation is not required. Further, since an enzyme or the like used in a biosensor chip may be sensitive to heat or UV irradiation, it is desired that in such a case, a pressure sensitive adhesive material be used as adhesion means to the extent possible. However, in order to achieve high adhesiveness, the pressure sensitive adhesive material has to use a material that is soft in some extent and easily deformed. Therefore, the size tends to change and the thickness, etc., of the pressure sensitive adhesive layer also tends change, in accordance with a time-transient change due to residual stress being applied during the lamination process, and changes in temperature, humidity, etc., in the environment.

When the thickness of the pressure sensitive adhesive layer changes after adhesion using the pressure sensitive adhesive material, the distance between the substrate and the cover layer is changed, and accordingly, the volume of the hollow reaction section is also changed. When the volume of the hollow reaction section is changed, a problem occurs such that the quantity of a sample to be introduced into the reaction section varies, and as a result, the measurement value varies.

On the other hand, in JP-A-11-94791, a biosensor chip is described which is constituted by directly adhering a substrate and a cover layer without a spacer layer intervening in-between. This biosensor chip has a raised portion on the substrate, and the raised portion adheres to the cover layer. However, since the -substrate and the cover layer are secured by only the narrow adhered portion between the raised portion and the cover layer without using a spacer layer, this biosensor chip is poor in strength, and has a problem in reliability. Further, as another problem, since the entire surface of the cover layer except the adhered portion becomes one face of the hollow reaction section, the volume of the reaction section becomes larger than when the space layer is employed, and the quantity of a sample to be required is increased.

Thus, there has been a demand for the development of a biosensor chip that uses a spacer layer, i.e., a biosensor chip that has a substrate, a cover layer and a spacer layer sandwiched between the substrate and the cover layer, which does not cause the volume change of a reaction section in accordance with a time-transient change or changes in the environmental temperature, humidity, etc., when a pressure sensitive adhesive material is employed for the adhesion of the substrate, the cover layer and the spacer layer, etc.

Further, in JP-A-11-94791, disclosed is a biosensor chip wherein a raised portion is formed in a substrate, and by this raised portion, the substrate is directly adhered to a cover layer so as to form a hollow reaction section, without a spacer layer intervening in-between. Description is given for an example wherein enzymes are contained in the hollow reaction section on both the substrate side and the cover layer side (paragraph 0021).

As described in this example, since a agent, such as enzymes, is contained in the sensor chip on both the substrate side and on the cover layer side, for example, the following superior effects (1) to (3) are obtained. (1) Since a contact area of a sample introduced into the reaction section and an agent can be increased, the reaction period can be reduced. (2) When enzymes, etc., are provided in one location and a surface active agent is provided in another location, because of the surface active agent, introduction of a sample into the reaction section can be performed extremely smoothly, even when an introduction port provided to guide a sample to the reaction section is small. Further, the sample in the reaction section is uniformly distributed, and an inspection period and variance in an inspection can be reduced. (3) Since different types of enzymes that react with different chemical materials are arranged at two locations or more, a biosensor chip having a detection function with respect to a plurality of chemical materials can be prepared.

On the other hand, in JP-A-10-2874 or JP-A-11-94791, disclosed is a lamination type biosensor chip wherein a spacer layer having a hollow reaction section is positioned on a substrate, and a cover layer is overlaid (paragraph 0003). Such a lamination type biosensor chip is widely employed because the productivity is high, and the size of the reaction section and the required quantity of a sample can be reduced.

However, for a conventional laminated type biosensor chip, a cover layer to be the upper face of a sensor chip and a substrate to be the lower face of a sensor chip are prepared separately. In order to arrange an agent in the hollow reaction section on both the cover layer side and the substrate side, the agent must be applied separately. Then, the number of processes is doubled, and productivity is remarkably deteriorated. Therefore, for the conventional lamination type biosensor chip, it is difficult for an agent such as an enzyme to be arranged on both sides while maintaining high productivity, and the resolution of this problem has been demanded.
(Patent Document 1) JP-A-10-2874
(Patent Document 2) JP-A-11-94790
(Patent Document 3) JP-A-11-94791

### Disclosure of the Invention

### Problems that the Invention is to Solve

One objective of the present invention is to provide a sensor chip that includes: a substrate a cover layer ; a spacer layer sandwiched between the substrate and the cover layer; and a hollow reaction section between the substrate and the cover layer, wherein warping due to changes in the environmental temperature and humidity or due to the elapse of time does not occur. Another objective of the present invention is to provide a method of manufacturing this sensor chip.

An additional objective of the present invention is to provide a sensor chip that includes: a substrate; a cover layer; a spacer layer sandwiched between the substrate and the cover layer; and a hollow reaction section between the substrate and the cover layer, wherein, when a pressure sensitive adhesive material is employed for the adhesion of the individual layers, the volume change of a reaction section in accordance with a time-transient change, or changes in the environmental temperature, humidity, etc., does not occur.

A further objective of the present invention is to provide a sensor chip manufacturing method of enabling the production of a lamination type sensor chip at high productivity, which is obtained by laminating a substrate, a spacer layer having a hollow reaction section and a cover layer, and in which a agent is located in the hollow reaction section both on the cover layer side and on the substrate side, and to provide a sensor chip produced using this method.

### Means for Solving the Problems

As the result of a careful study, the present inventors found that by making structure of a sensor chip except for an electrode (a detection section) and an agent applied portion to be a symmetrical structure with respect to a central plane in the cross-sectional direction of lamination, the central plane serving as an axis, a sensor chip can be obtained wherein warping due to changes in the environmental temperature and humidity or due to elapsed time does not occur, and completed the present invention.

That is, the present invention provides a sensor chip, comprising:
a substrate;
a cover layer;
a spacer layer sandwiched between the substrate and the cover layer;
a hollow reaction section provided between the substrate and the cover layer; and
a detection section provided in the hollow reaction section,
wherein the substrate and the cover layer are made of the same material and have the same thickness, and
a material and a shape of the spacer layer are symmetrical with respect to a plane which is parallel to the substrate and located at equal distances from the substrate and from the cover layer.

As the material of the substrate and the cover layer, which is the same, a film of an insulating material is selected, and ceramics, glass, paper, a biodegradable material (e.g., polyactic acid microbial produced polyester), polyvinyl chloride, polypropylene, polystyrene, polycarbonate, acrylic resin, thermoplastic resin such as polybutylene terephthalate or polyethylene terephthalate (PET), a thermosetting resin such as epoxy resin, or a plastic material such as a UV curing resin, can be exemplified as an insulating material. Because of the mechanical strength, flexibility and ease of manufacture and processing of a chip, and especially because of the ease in folding, which will be described later, etc., a plastic material such as polyethylene terephthalate is preferable.

The preferable thickness range for the substrate and the cover layer that have the same thickness varies depending on the usage of a sensor chip, etc., and is not especially limited. In the case of a biosensor chip such as a blood sugar level sensor, about 100 to 300 µm is preferable.

The sensor chip of this invention also includes a spacer layer sandwiched between the substrate and the cover layer. "Sandwiched" means that one side of the spacer layer is adhered to the substrate and the other side is adhered to the cover layer. An electrode layer may also be provided between the spacer layer and the substrate or the cover layer.

The sensor chip of this invention further includes the hollow reaction section between the substrate and the cover layer. The hollow reaction section is a portion wherein, when the sensor chip is used, a sample is introduced and the introduced sample makes a chemical reaction. The hollow reaction section is formed by using a groove that the spacer layer has, and as described below, an electrode is included therein. Furthermore, in the case of a biosensor chip, agents, such as catalysts and enzymes that induce a biochemical reaction, are secured internally, so that a chemical reaction of a sample is accelerated by the agents.

For example, in the case of a glucose biosensor chip that measures the glucose amount in blood, a glucose oxidase layer, a glucose oxidase/electron acceptor (mediator) mixture layer, a glucose oxidase/albumin mixture layer, or a glucose oxidase/electron acceptor/albumin mixture layer, etc., is formed in the hollow reaction section. These layers may be formed by using an enzyme other than glucose oxidase, e.g., glucose dehydrogenase, etc. Further, as an additive agent, a buffer agent, hydrophilic polymer, etc., may be contained in the agent.

Fixing of the agent, i.e., formation of these layers may be performed before the groove is formed by the adhesion of resist members, which will be described later, etc., or may be performed after the groove is formed and before the hollow reaction section is formed by lamination of the substrate, the spacer layer and the cover layer, or may be performed after the hollow reaction section has been formed. While taking into account the ease of performance of the agent application process and of the positioning for the application of the agent, it is generally preferable that the agent be fixed after the groove is formed and before the hollow reaction section is formed.

A sample to be measured, e.g., blood, urine, or a solution sample extracted from a production line, etc., is introduced into the hollow reaction section through a sample introduction port. The sample introduction port may be provided in the substrate or the cover layer, and may be connected to the hollow reaction-section via a sample introduction path. The hollow reaction section may be open at at least one side of the spacer layer and serve as a sample introduction port. A plurality of sample introduction ports may be provided.

Further, the sensor chip of the invention has a detection section in the hollow reaction section. Here, the detection section includes at least two or more electrodes. These electrodes are generally called a working electrode or a counter electrode, and the detection section may include another electrode such as a reference electrode, and other means. The electrodes provide operations such as application of a predetermined voltage to the hollow reaction section and measurement of the value of a current received from the hollow reaction section, and based on signals obtained from the electrodes, detection and quantitative test of a chemical material in a sample are performed.

The electrodes are exposed inside the hollow reaction section, and a lead line portion of the electrodes is formed in the substrate, the spacer layer or the cover layer, or between them, so that the electrodes are electrically connected to the outside of the sensor chip. Through the lead line portion, application of a predetermined voltage, measurement of a current value, etc., are performed.

As described above, in the sensor chip of the invention; the structure except for the electrodes and the agent applied portion is symmetrical with respect to the central plane, as an axis, in the cross-sectional direction of lamination. This is obtained by employing a structure wherein the substrate and the cover layer are made of the same material and have the same thickness, and that the material and the shape of the spacer layer are symmetrical with respect to the central plane, as an axis, in the cross-sectional direction. Here, the central plane in the cross-sectional direction is defined as a plane that is parallel to the substrate (and the cover layer) and is located at equal distances from the substrate and from the cover layer (hereinafter, this plane is referred to simply as the central plane).

Here, "the material and the shape are symmetrical" indicates that the thicknesses on both sides of the central plane are equal, and that the materials located at equal distances from the central plane are the same. Further, when a hollow portion such as a groove is provided in the spacer layer, the above description is used to define the shapes of the hollow portion along both sides of the central plane are in relation of a mirror image. As described above, in the sensor chip of this invention, the substrate, the cover layer and the spacer layer are symmetrical along the central plane as the axis. Thus, the individual layers are stretched in the same manner on both sides of the central plane in accordance with the environmental temperature and humidity change, and therefore, warping does not occur as time elapses. It should be noted that when electrodes (detection section) and agents are provided only on the substrate, the electrode layer and the agent layer become asymmetrical elements. In this case, it was also found that warping did not occur.

Generally, the spacer layer is formed by a single-layer spacer member or by laminating a multiple layer spacer members. A material used for formation of the substrate (and the cover layer), etc., can be employed as the material for the spacer member. The spacer layer (and a sheet layer that is to be described later) can be obtained by the adhesion of such spacer members, or by applying the spacer members using a method such as screen printing and curing them as needed. The curing method used can be thermosetting or UV curing, and an appropriate method is selected according to the type of a resin to be employed, etc. A pressure sensitive adhesive material or an adhesive is employed to bond the spacer members. Further, for adhering the spacer layer, the substrate and the cover layer, a pressure sensitive adhesive material or an adhesive is also employed. The layer of the pressure sensitive adhesive material or the adhesive used for adhering is also regarded as a spacer member, and constitutes the spacer layer.

A method such as screen printing can also be employed for applying the pressure sensitive adhesive material or the adhesive. A rubber type pressure sensitive adhesive material, an acrylic type pressure sensitive adhesive material, or a silicon type pressure sensitive adhesive material is exemplified as a pressure sensitive adhesive material. Further, an epoxy adhesive, a vinyl acetate adhesive or a silicon adhesive is exemplified as an adhesive, and for each material, a thermosetting adhesive or a UV curing adhesive can be employed as a type of curing.

Additionally, in a process for forming electrodes (and lead lines) on the substrate (or the cover layer) by screen printing, in order to increase the insulating characteristic between the electrodes and to physically protect the electrodes, a resin layer, called a resist layer, may be formed by a resist material, on the substrate (or the cover layer) so as to cover the electrodes (and the lead lines) except for the portion exposed to the hollow reaction section. An urethane resin, an epoxy resin, a denatured polyimide resin, an acrylic resin, etc., may be employed as this resist material. This resist layer is also regarded as a spacer member and constitutes the spacer layer.

When the spacer layer is formed of a multiple layer spacer member (including layers such as of a pressure sensitive adhesive material and an adhesive), the individual spacer members may differ in the material, the thickness, etc., under the following conditions. However, in the sensor chip of the invention, since the spacer layer has to be symmetrical with respect to the central plane, the two spacer members located on both sides of the central plane and at equal distances from the central plane have the same thickness and the same materials. This spacer layer is obtained by adhering a sheet layer having a groove, in which the material, the thickness and the position of the groove are identical, so that the grooves are aligned and are symmetrical with respect to the adhered faces.

The sheet layer is a layer that constitutes the spacer layer, and is a layer on either sides of the central plane. The sheet layer may be a single-layer spacer member, or a lamination of multiple layer spacer members. The sheet layer can be formed by applying and curing a resist material, a pressure sensitive adhesive material, an adhesive, etc., on the substrate, and by laminating the spacer member on the substrate, or by laminating multiple layer spacer members. A resist material, a pressure sensitive adhesive material or an adhesive is employed for the lamination of spacer members, and the layer of the resist material, the pressure sensitive adhesive material or the adhesive is regarded as the spacer member and constitutes the sheet layer. The space obtained by aligning the grooves forms a hollow reaction section. It should be noted that to align grooves, the shapes of the grooves have to be in relation of a mirror image. It is preferable that the individual grooves are shaped linear, while taking into account ease of manufacturing and ease of applying agents.

Further, the present invention provides the sensor chip, wherein the spacer layer is formed by adhering a pair of sheet layers together which has a groove and is made of a spacer member of a single layer or multiple layers,
each of the pair of sheet layers is made of the same material and has the same thickness, and
the pair of sheet layers is adhered together so as to be symmetrical with respect to the plane.

The sensor chip of the invention is also obtained, for example, by adhering a sheet layer on a substrate sheet serving as a substrate and a cover layer, and by folding the substrate sheet over at a fold line that substantially equally divides the substrate sheet in two so that portions of the sheet layer face each other. In this case, the substrate sheet serving as a substrate and a cover layer is a member that becomes a substrate and a cover layer after a sensor chip is prepared.

In a method of folding along the fold line, in addition to a method of folding at the position of the fold line, there is a method of folding at the positions of two straight lines that are parallel to the fold line and located at equal distances from the fold line, so as to obtain a U-shaped cross section. A pressure sensitive adhesive material or an adhesive is employed to bond the portions of a sheet layer, and to bond the sheet layer to the substrate sheet, and either layer of this pressure sensitive adhesive or the adhesive is also regarded as a spacer member and constitutes the spacer layer. Since a layer positioned on the central plane is neutral with respect to warping, there is no problem when the layer is not in pair. Thus, the layer of the pressure sensitive adhesive material or the adhesive used for adhering the portions of the sheet layer need not also be in pair. Of course, an adhering function may be provided for the spacer member positioned as the topmost faces of the sheet layer so that adhesion without using a pressure sensitive adhesive material or an adhesive is possible.

The sheet layer includes a pair of grooves that are symmetrical with respect to the fold line, which serves as an axis, and is adhered to the substrate sheet so that at least one of the grooves includes the detection section, i.e., an electrode. Therefore, when folding over along the fold line, the grooves are aligned, and a hollow reaction section that includes the detection section (the electrode) is formed inside.

Furthermore, the present invention provides the sensor chip, wherein after a laminated body is formed by laminating a sheet layer on a substrate sheet serving as the substrate and the cover layer, the sheet layer having a pair of grooves that are symmetrical with respect to a fold line which serves as an axis, the fold line dividing the substrate sheet substantially equally in two, so that at least one of the grooves includes the detection section therein,
the laminated body is folded over along the fold line so that the pair of grooves aligns with each other so as to form the hollow reaction section, and
portions of the sheet layer are adhered together,
thereby the sensor chip is obtained.

An example of the pair of grooves that are symmetrical along the fold line can be curved lines or fold lines that are in relation of the mirror image. However, while taking into account the ease of manufacturing and ease of application of an agent, it is preferable that the individual grooves be shaped linear, in parallel, and at equal distances from the fold line. Further, the present invention provides a sensor chip wherein the pair of grooves is parallel to each other and is shaped linear.

The sensor chip of the present invention is employed, especially as a biosensor chip, preferably as a blood sugar level sensor that measures the glucose level (blood sugar level) of blood, a urine sugar level sensor that measures a urine sugar level, etc. As described above, the present invention provides a sensor chip wherein the sensor chip is a biosensor chip.

Additionally, the present invention provides a method of manufacturing the above described sensor chip. Specifically provided is a manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate or the cover layer; and
adhering a laminated body 1 and a laminated body 2 so that sheet layers of both the laminated body-1-and the laminated body 2 face each other, and grooves of both the sheet layers align with each other, thereby forming the hollow reaction section,
wherein the laminated body 1 is obtained by forming the sheet layer which has a groove and is made of a spacer member of a single layer or multiple layers, so that the detection section is included in the groove, and
the substrate sheet and the sheet layer of the laminated body 2 are made of the same material, and have the same thicknesses and the same formation as those of the laminated body 1.

This is a method of adhering the lamination bodies constituted by the same substrate sheets and the same sheet layers with the sheet layers facing each other. In this case, "the same structure" indicates that the number of spacer members (including pressure sensitive adhesive material, etc.) constituting the sheet layer and the material thereof, the order of lamination, the position, the size and the shape of the grooves are identical, or in a relation of a mirror image. A pressure sensitive adhesive material or an adhesive may be employed to bond sheet layers, or adhesiveness may be provided for the topmost faces of the sheet layers to bond them directly. Further, the detection section may or may not be formed in the laminated body 2.

The present invention provides a manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate and the cover layer;
forming a laminated body by laminating a sheet layer having a pair of grooves which are symmetrical with respect to a fold line that serves as an axis, so that at least one of the grooves includes the detection section therein, the sheet layer being a laminated body of a spacer member or multiple spacer members, and the fold line dividing the substrate sheet substantially equally in two;
folding the laminated body over along the fold line after forming the laminated body so that the sheet layers face each other; and
adhering the sheet layers together.
According to this method, a pair of grooves that the sheet layer has are symmetrical with respect to the fold line as an axis, and then the sheet layer is folded over along the fold line. Therefore, since the sheet layer is folded over and adhered, the grooves are aligned and a hollow reaction section is formed.

Further, the present inventors found that the above objectives can be achieved by firmly connecting the substrate and the cover layer at their one ends and by fixing so that there is no change in the distance between them, and completed the present invention.

The present invention provides a sensor chip, comprising:
a substrate;
a cover layer;
a spacer layer sandwiched between the substrate and the cover layer;
a hollow reaction section provided between the substrate and the cover layer; and
a detection section provided in the hollow reaction section,
wherein the substrate and the cover layer are connected to each other at one end of the substrate and one end of the cover layer, and are integrally formed.

Different materials may be employed for the substrate and the cover layer as long as these two can be connected firmly. However, it is preferable that the same material be employed in order to easily obtain a firm connection between them. An insulating film material may be selected as that material, and ceramics, glass, paper, a biodegradable material (e.g., polyactic acid microbial produced polyester), polyvinyl chloride, polypropylene, polystyrene, polycarbonate, acrylic resin, thermoplastic resin such as polybutylene terephthalate or polyethylene terephthalate (PET), a thermosetting resin such as epoxy resin, or a plastic material such as a UV curing resin, can be exemplified as the insulating material. Because of the mechanical strength, flexibility and ease of manufacture and processing of a chip, and especially because of the ease in folding, which will be described later, a plastic material such as polyethylene terephthalate is preferable.

The same or different thicknesses may be employed for the substrate or the cover layer. The preferable thickness range for the substrate and the cover layer varies depending on the usage of a sensor chip, etc., and is not especially limited. In the case of a biosensor chip such as a blood sugar level sensor, about 100 to 300 µm is preferable.

The sensor chip of this invention also includes a spacer layer sandwiched between the substrate and the cover layer. "Sandwiched" means that one side of the spacer layer is adhered to the substrate and the other side is adhered to the cover layer. Another layer such as an electrode may also be present between the spacer layer and the substrate or the cover layer. For adhesion, a pressure sensitive adhesive material such as a double-sided tape is employed. In this invention, when a pressure sensitive adhesive material is employed, variance in the thickness of a chip due to the elapse of time, etc., is still suppressed.

The spacer layer may be formed of either one spacer member or a laminated body of multiple layer spacer members. Each spacer member of the multiple layer spacer members may be different from each other. The same materials as the examples used for the substrate and the cover layer can be employed as the materials for the spacer layer. For example, these materials and the pressure sensitive adhesive material are applied to the substrate and the other spacer member by using screen printing, etc., and thereafter, the topmost spacer member is adhered to the cover layer so that the spacer layer sandwiched between the substrate and the cover layer can be formed. When the spacer layer is made of the multiple layer spacer members in this manner, the spacer members may be adhered together by using a pressure sensitive adhesive material. As in the above described case, in this invention, when a pressure sensitive adhesive material is employed, variance in the thickness of a chip due to the elapse of time, etc., is still suppressed.

The sensor chip of this invention further includes the hollow reaction section between the substrate and the cover layer. The hollow reaction section is a portion wherein, when the sensor chip is used, a sample is introduced and the introduced sample makes a chemical reaction. The hollow reaction section is formed by using a groove that the spacer layer has, and as described below, an electrode is included therein. Furthermore, in the case of a biosensor chip, agents, such as catalysts and enzymes that induce a biochemical reaction, are secured internally, so that a chemical reaction of a sample is accelerated by the agents.

For example, in the case of a glucose biosensor chip that measures the glucose amount in blood, a glucose oxidase layer (GOD), a glucose oxidase/electron acceptor (mediator) mixture layer, a glucose oxidase/albumin mixture layer, or a glucose oxidase/electron acceptor/albumin mixture layer, etc., is formed in the hollow reaction section. These layers may be formed by using an enzyme other than glucose oxidase, e.g., glucose dehydrogenase (GDH), etc. Further, as an additive agent, a buffer agent, hydrophilic polymer, etc., may be contained in the agent.

A sample to be measured, e.g., blood, urine, or a solution sample extracted from a production line, etc., is introduced into the hollow reaction section through a sample introduction port. The sample introduction port may be provided in the substrate or the cover layer, and may be connected to the hollow reaction section via a sample introduction path. The hollow reaction section may be open at at least one side of the spacer layer and serve as a sample introduction port. A plurality of sample introduction ports may be provided.

Further, the sensor chip of the invention has a detection section in the hollow reaction section, that is, the detection section is exposed inside the hollow reaction section. Here, the detection section includes at least two or more electrodes. These electrodes are generally called a working electrode or a counter electrode, and the detection section may include another electrode such as a reference electrode, and other means. The electrodes provide operations such as application of a predetermined voltage to the hollow reaction section and measurement of the value of a current received from the hollow reaction section, and based on signals obtained from the electrodes, detection and quantitative test of a chemical material in a sample are performed.

The electrodes are exposed inside the hollow reaction section, and a lead line portion of the electrodes is formed in the substrate, the spacer layer or the cover layer, or between them, so that the electrodes are electrically connected to the outside of the sensor chip. Through the lead line portion, application of a predetermined voltage, measurement of a current value, etc., are performed.

In the sensor chip of the invention, the substrate and the cover layer are connected at their one ends and integrally formed. "Connected and integrally formed" means that the connection is made so that the positional relationship of the two does not change. Therefore, the distance between the substrate and the cover layer is fixed at this portion and does not change. As a result, a change in the distance between the substrate and the cover layer in the hollow reaction section is suppressed, and a change in the volume of the reaction section in accordance with a time-transient change or a change in either the environmental temperature or humidity, which is a problem of the related art, is also suppressed.

In the general sensor chip, the hollow reaction section is provided at a position close to one end of the sensor chip, rather than a center of the sensor chip. Therefore, it is preferable that the end near the hollow reaction section be selected as this one end, and the substrate and the cover layer be firmly connected and formed integrally at this end, because a change in the volume of the hollow reaction section can be more effectively suppressed.

The method of obtaining the substrate and the cover layer that are connected at their one ends and formed integrally is not especially limited. For example, when the substrate and the cover layer are formed of thermoplastic resin, a method of fusing and adhering these two at this portion may be employed, or a method of adhering the two by using a strong adhesive may also be employed.

Especially, a method in which one substrate sheet is folded over along a fold line that substantially equally divides the substrate sheet in two, and in which one side from the fold line is employed as a substrate while the other side is employed as a cover layer is regarded as a preferable method, because manufacturing of the sensor chip is easy and a firm connection can be stably obtained. The present invention provides a sensor chip that is obtained by such a preferable method, and wherein the substrate and the cover layer are formed by folding one substrate sheet over along a fold line that divides the substrate sheet substantially equally in two.

In a method of folding along the fold line, in addition to a method of folding at the position of the fold line, there is included a method of folding at the positions of two straight lines that are parallel to the fold line and located at equal distances from the fold line, so as to obtain a U-shaped cross section.

The sensor chip of the present invention is employed, especially as a biosensor chip, preferably as a blood sugar level sensor that measures the glucose level (blood sugar level) of blood, a urine sugar level sensor that measures a urine sugar level, etc. The present invention is pertinent to this preferred aspect, and provides the above described sensor chip wherein the sensor chip is a biosensor chip.

Preferably, the sensor chip wherein the substrate and the cover layer are formed by folding one substrate sheet over along a fold line that divides the substrate sheet substantially equally in two, is manufactured using a method constituted as follows. The present invention also provides a manufacturing method of a sensor chip pertinent to these preferable aspects.

Specifically, the present invention provides a manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section at least on one side of one substrate sheet and of a fold line that divides the substrate sheet substantially equally in two;
folding the substrate sheet over along the fold line;
inserting a spacer layer having a groove portion between the folded substrate sheet; and
adhering the spacer layer to the folded substrate sheet so as to obtain a laminated body.

Additionally, the present invention provides a manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section and a spacer layer having a groove portion at least on one side of one substrate sheet and of a fold line that divides the substrate sheet substantially equally in two;
folding the substrate sheet over along the fold line ; and
adhering the spacer layer and the other side of the substrate sheet so as to obtain a laminated body.

The method of this invention is a method of forming an integral substrate by folding one substrate sheet on which the detection section is formed over so as to divide the substrate substantially equally in two, and adhering the spacer layer by inserting the spacer layer having a hollow reaction section into the folded substrate. Another method of this invention is a method of forming a spacer layer having a hollow reaction section on one side of a line that divides, substantially equally in two, one substrate sheet on which the detection section is formed, and thereafter, of folding the substrate sheet over along this line so as to bond the spacer layer and the substrate.

As described above, the spacer layer may be formed by lamination before the folding process, or by insertion after the folding process. When the spacer layer is to be inserted after the substrate sheet is folded, insertion is difficult when a pressure sensitive adhesive material is present before the insertion, at the portion whereat the substrate and the cover layer and/or the spacer layer are adhered. Thus, it is preferable that a thermosetting, UV curing adhesive, etc., be employed instead of a pressure sensitive adhesive material, and that after the spacer layer is inserted, the spacer layer, the substrate and the cover layer be adhered and fixed by applying heat or irradiating UV.

For either the method of laminating before the substrate sheet is folded, or the method of inserting after the substrate sheet is folded, it is preferable that a substrate sheet made of thermoplastic resin be employed, and that after folding, a thermal process be performed for the folding portion. Through the thermal process, since the remaining stress due to the folding is removed and the folding portion is fixed, variance of the positional relationship between the substrate and the cover layer due to the elapse of time, etc., can be more effectively suppressed. As described above, the present invention provides a sensor chip manufacturing method
wherein the substrate sheet is made of thermoplastic resin, and
after the substrate sheet is folded, a thermal process is applied on the folding portion

As described above, a method of folding so as to obtain a U-shape in cross section is also included in the folding. When a thermoplastic resin such as PET is employed as a substrate sheet, a method of forming a sheet made of thermoplastic resin into a U-shape by folding the sheet while applying heat, like press molding, is especially preferable as a folding method and a thermal process to be performed thereafter, because accurate and economical manufacturing is available. At this time, when holes (so-called perforations) are partially formed, or a groove (a so-called half-cut) is formed in advance along the fold line of a sheet, and thereafter, the sheet is folded, the folding accuracy is increased. It should be noted that a method that uses a groove is more preferable than a method of forming holes, in order to maintain a high fixing strength of the substrate and the cover layer.

In the case of a biosensor chip, an agent including an enzyme, etc., is settled on the substrate or the cover layer in the hollow reaction section. According to the method of laminating the spacer layer on the substrate sheet before folding, settling of the agent can be performed either before or after the sheet is folded.

However, after the sheet has been folded, the application and settling of a agent using, for example, a dispenser is frequently difficult. Thus, from the viewpoint of productivity, a method of settling a agent on the substrate sheet before it is folded is preferable. On the other hand, when agent settling is performed before the sheet is folded, a agent, such as an enzyme, would be deteriorated by heat during the thermal process performed for the folding portion. Therefore, when a agent, such as an enzyme, has low resistance to heat, a process such as settling the agent settling portion outside the heating area is required. It should be noted that to simplify the positioning of a agent to be settled, the method of settling the agent should be performed after the spacer layer has been laminated, rather than before the spacer layer is laminated.

It is generally preferable that the temperature used for the thermal process for thermoplastic resin be equal to or higher than the middle of the resin softening temperature (glass transition temperature) and the melting point, and equal to or lower than the melting point. When the thermal process temperature is lower than the middle of the resin softening temperature and the melting point, the residual stress of the folding portion is not appropriately removed, and the folding portion may be changed as time elapses. On the other hand, when the thermal process temperature exceeds the melting point, deformation of the resin is increased, and a smooth folding face may not be maintained. Since the resin softening temperature of a PET resin is about 70°C and the melting point is about 250°C, it is preferable that for a substrate sheet made of a PET resin, the thermal process temperature of the folding portion to be equal to or higher than 160°C and equal to or lower than 250°C. A typical PET resin can be Melinex or Tetoron (product name, manufactured by Teij in DuPont Films Japan, Ltd.), Lumirror (product name, Toray Industries Inc.), etc. On the other hand, since an enzyme such as GOD or GDH may be deteriorated at a temperature of 60°C or higher, it is preferable that for a biosensor chip that employs this enzyme, a process such as adjusting the thermal process temperature and separating the hollow reaction section from the fold line by an appropriate distance be performed, so that the settling portion of the enzyme is not equal to or higher than 60°C.

In any of the manufacturing methods described above, when the method is implemented for one sensor chip, productivity is low, and a difference in the distance between the substrate and the cover layer varies for each sensor chip. As a result, a problem tends to occur such that variance in the volume of the reaction section increases, and variance in measured values increases. Thus, as a preferable method, a single substrate sheet that corresponds to multiple sensor chips is employed, and while multiple pairs of detection section are formed, the above described manufacturing method is performed. Then, multiple sensor chips are formed on a single substrate sheet, and thereafter, the sheet is cut into individual sensor chips. By using this method, productivity is improved, and multiple sensor chips can be manufactured following one series of steps, so that a variance in the volume of the reaction section, etc., can be prevented.

In the formation of the detection section according to this method, multiple pairs of detection sections are formed so as to be arranged in parallel in the direction of the fold line. Here, one pair of detection sections is a pair of electrodes that corresponds to the detection sections of an individual sensor chip, and includes at least two electrodes called a working electrode and a counter electrode. When the folding, formation of a spacer layer, insertion of the spacer layer, etc., as described above, are performed with respect to one substrate sheet where multiple pairs of detection section are formed, a laminated body is obtained wherein multiple sensor chips are arranged and connected in parallel in the direction of the fold line.

By cutting this laminated body along one or a plurality of straight lines perpendicular to the fold line, multiple sensor chips that are separated can be obtained. Cutting is so performed that at least one pair of detection sections is included in each cut-out chip. As described above, the present invention provides a sensor chip manufacturing method, further comprising:
forming multiple pairs of the detection sections while arranging the detection sections in parallel in a direction of the fold line; and
cutting the obtained laminated body along one or a plurality of straight lines perpendicular to the fold line, so that at least one pair of detection sections is included in each sensor chip.

Furthermore, as a result of consideration, the present inventors found that the above described objectives are achieved by the following configuration, and completed the present invention.

Specifically, the present invention provides a manufacturing method of a sensor chip having a substrate that is folded, a spacer layer sandwiched between the folded substrate, a hollow reaction section provided between the folded substrate, and a detection section provided in the hollow reaction section, the method comprising:
obtaining a laminated body 1 by laminating a sheet layer on the substrate on which the detection section is formed, the sheet layer having one or more than one pair of grooves that are axisymmetrical with respect to a fold line that serves as an axis, the fold line dividing the substrate substantially equally in two, so that at least one of the grooves includes the detection section;
applying agents to the substrate simultaneously at positions corresponding to each groove of the pair of grooves; and
after the two steps, folding the laminated body 1 over along the fold line and adhering portions of the sheet layer so as to form a spacer layer.

A sensor chip manufactured by the manufacturing method of this invention is a sensor chip that includes a folded substrate, a spacer layer sandwiched between the substrate, a hollow reaction section between the substrate, and the detection section in the hollow reaction section. The folded substrate corresponds to a substrate and a cover layer of a lamination type sensor chip of the related art. Since the substrate and the cover layer are obtained from a single substrate, these two are connected at one end, and have the same material and thickness. An insulating film material may be selected as that material, and ceramics, glass, paper, a biodegradable material (e.g., polyactic acid microbial produced polyester), polyvinyl chloride, polypropylene, polystyrene, polycarbonate, acrylic resin, thermoplastic resin such as polybutylene terephthalate or polyethylene terephthalate (PET), a thermosetting resin such as epoxy resin, or a plastic material such as a UV curing resin, can be exemplified as the insulating material. Because of the mechanical strength, flexibility and ease of manufacture and processing of a chip, and especially because of the ease in folding, which will be described later, a plastic material such as polyethylene terephthalate is preferable. The preferable thickness range for the substrate and the cover layer varies depending on the usage of a sensor chip, etc., and is not especially limited. In the case of a biosensor chip such as a blood sugar level sensor, about 100 to 300 µm is preferable.

This substrate is folded over along a fold line that divides the substrate substantially equally in two when the substrate is open. The spacer layer is sandwiched between the folding portions of the substrate. In a method of folding along the fold line, in addition to a method of folding at the position of the fold line, there is included a method of folding at the positions of two straight lines that are parallel to the fold line and located at equal distances from the fold line, so as to obtain a U-shaped cross section.

"The spacer layer is sandwiched between the folding portions of the substrate" means that the two faces of the spacer layer are adhered to the folding portions of the substrate. Another layer such as an electrode may be present between the spacer layer and the substrate.

According to the sensor chip manufactured by the manufacturing method of the invention, a hollow reaction section is formed between the folding portions of the substrate. The hollow reaction section is a portion wherein, when the sensor chip is used, a sample is introduced and the introduced sample makes a chemical reaction. The hollow reaction section is formed by using a groove that the spacer layer has, and as described below, an electrode is included therein. Furthermore, in the case of a biosensor chip, agents, such as catalysts and enzymes that induce a biochemical reaction, are secured internally, so that a chemical reaction of a sample is accelerated by the agents. In this invention, the agents are arranged on the upper face and the lower face of the hollow reaction section, i.e., on both sides of the pair of grooves that are formed in the substrate that is folded over.

In the case of a biosensor chip, agents such as a catalyst and an enzyme to be arranged are agents for causing a biochemical reaction, and may contain various types of auxiliaries to smoothly produce this biochemical reaction. More specifically, in the case of a glucose biosensor chip that measures the glucose amount in blood, a glucose oxidase (GOD), a glucose oxidase/electron acceptor (mediator) mixture, a glucose oxidase/albumin mixture, a glucose oxidase/electron acceptor/albumin mixture layer, etc., are exemplified. An enzyme other than glucose oxidase, e.g., glucose dehydrogenase (GDH), etc., is also exemplified. Further, as an additive agent, a buffer agent, hydrophilic polymer, etc., may be contained in the agent.

A sample to be measured, e.g., blood, urine, or a solution sample extracted from a production line, etc., is introduced into the hollow reaction section through a sample introduction port. The sample introduction port may be provided in the substrate or the cover layer, and may be connected to the hollow reaction section via a sample introduction path. The hollow reaction section may be open at at least one side of the spacer layer and serve as a sample introduction port. A plurality of sample introduction ports may be provided. It is especially preferable that the hollow reaction section be extended across the spacer layer, and that the openings at both ends serve as sample introduction ports. Since the hollow reaction section is shaped like a straw, by using a capillary phenomenon, a sample can be easily introduced into the hollow reaction section.

Further, the sensor chip manufactured by the manufacturing method of the invention has the detection section in the hollow reaction section. Here, the detection section includes at least two or more electrodes. These electrodes are generally called a working electrode or a counter electrode, and the detection section may include another electrode such as a reference electrode, and other means. The electrodes provide operations such as application of a predetermined voltage to the hollow reaction section and measurement of the value of a current received from the hollow reaction section, and based on signals obtained from the electrodes, detection and quantitative test of a chemical material in a sample are performed.

The electrodes are exposed inside the hollow reaction section, and a lead line portion of the electrodes is formed in the substrate, the spacer layer or the cover layer, or between them, so that the electrodes are electrically connected to the outside of the sensor chip. Through the lead line portion, application of a predetermined voltage, measurement of a current value, etc., are performed.

In the manufacturing method of the invention, normally, the above described detection section is formed on the substrate before that is folded over. Formation of the detection section can be performed by screen printing, plating, evaporation, adherence of metallic tape, etc. The detection section may be formed only on one side of the fold line, or on both sides of the fold line. Furthermore, when multiple sensor chips are to be manufactured through a series of steps, multiple pairs of detection sections are formed and arranged in parallel in the direction of the fold line. Here, one pair of detection sections is a pair of electrodes included in one sensor chip, and includes at least two electrodes, i.e., a working electrode and a counter electrode.

A sheet layer is laminated on the substrate where the detection section is formed, and a laminated body 1 is obtained. The sheet layer is a laminated body formed of a single-layer spacer member, or a multiple layer spacer members, and in this invention, a spacer layer is formed by the adhesion of two sheet layers. A spacer member is a single-layer film that constitutes a spacer layer.

The sheet layer includes equal to or more than one pair of grooves, i.e., two or more grooves, that are axisymmetrical with each other by using the fold line as an axis. The substrate and the sheet layers are laminated, so that at least one groove of the sheet layer includes the detection section, i.e., the electrode is exposed in the groove.

Since the two or more grooves in the sheet layer are present on the same plane, two or more grooves can be formed in the same process, and productivity can be improved, compared with a case where grooves are formed separately. As a method of laminating sheet layers and of forming grooves, a tape having a pressure sensitive adhesive layer may be adhered to the substrate where the detection section is formed, and both grooves may be obtained, for example.

However, while taking productivity into account, the method of applying a resin using a method such as screen printing is preferable because a sheet layer having one or more pairs of grooves can be laminated on the substrate by one process, i.e., by one application. According to this method, just by simply changing the shape of a printing plate, two or more grooves can easily be formed with the process load being the same as that required to form one groove. As described above, the present invention provides a manufacturing method of a sensor chip, wherein the lamination of the sheet layer having more than one pair of grooves that are axisymmetrical with respect to the fold line serving as the axis is performed in one step by applying a resin to the substrate.

According to the manufacturing method of the invention, the agent such as a catalyst or an enzyme is applied to the positions on the substrate corresponding to the grooves. As described above, there are at least two grooves, and in the manufacturing method of the invention, the agent is applied simultaneously to portions corresponding to at least two grooves. In the conventional manufacturing method, the agent is applied separately to two portions, and thus, productivity is low. However, according to this invention, which has the above described arrangement, simultaneous application at two positions is enabled, and as a result, high productivity is achieved.

By the step of laminating a sheet layer and the step of applying an agent, a laminated body is obtained wherein two or more grooves are formed in the substrate, and an agent is applied in the two or more grooves. Thereafter, this laminated body is folded over along the fold line. The laminated body may be folded over so as to obtain a U-shaped cross section, as described above. Then, portions of the sheet layer overlap and the overlapped portions of the sheet layers are adhered, whereby a spacer layer is obtained, and a sensor chip is manufactured wherein the spacer layer is sandwiched between the folded portions of the substrate. Further, when the laminated body is folded along the fold line, the pair of grooves that the sheet layer has are aligned and forms a hollow reaction section. Since the agent has already been applied individually to one pair of pair grooves, the agent is arranged on the upper face and the lower face of the hollow reaction section.

Either the sheet layer lamination step or the agent application step may be performed first. As an example of this invention, the agent application step is performed first, and a sensor chip manufacturing method is provided wherein the laminated body 1 is obtained by forming the sheet layer having the pair of grooves after applying the agents. According to this method, after the agent is applied, the sheet layer is formed by a method such as of adhering a member of the sheet layer around the agent, or of applying a resin around the agent.

Further, as another example of the present invention, the sheet lamination step is performed first, and a sensor chip manufacturing method is provided wherein the agents are applied after obtaining the laminated body 1 by forming the sheet layer having the pair of grooves. According to the method of performing the sheet layer lamination step first, the area of the hollow reaction section is clearly identified before folding. Therefore, since the application area and the application position of the agent can be easily determined before application, this method is preferable from the viewpoint of ease of manufacturing, and is also preferable because a high quality biochip can be manufactured.

Two parallel linear grooves which are located at equal distances from the fold line before folding is performed, are preferable as a pair of grooves in the sheet layer that are axisymmetrical with respect to the fold line that is used as an axis. In this case, a coating machine having a simple structure in which two nozzles are fixed can simultaneously apply a coating to positions corresponding to the two grooves. That is, in this case, for example, one coating machine having two nozzles for an upper face and a lower face is employed, the distance between the two nozzles is fixed, and the coating machine or the laminated body is moved in parallel to the grooves, thereby the agent can sequentially be applied to both application surfaces simultaneously. This procedure, therefore, is very economical. As described above, the present invention provides a sensor chip manufacturing method wherein the grooves of the pair are parallel and are shaped linear..

The agents to be applied to two or more grooves may be the same or different. As described above, when an enzyme is applied to one groove, and a surface active agent is applied to the other groove, a sample can extremely smoothly be introduced into a reaction layer even when the sample introduction port is small. Further, the sample can be uniformly distributed within the reaction section, the inspection period can be reduced, and variances in an inspection are also effectively reduced. When the same enzyme is applied to both faces, the contact area of the sample and the enzyme is increased, so that the reaction period of the sample and the enzyme can be reduced. Further, when different types of enzymes that react with different chemical materials are applied to both faces, a biochip having a plurality of sample detection functions can be prepared.

According to this invention, when different nozzles are employed for different agents in the above described coating machine, the different agents can be applied without increasing the load imposed on the process. As an example of the invention of applying different agents, provided is a sensor chip manufacturing method wherein the different agents are simultaneously applied at the positions corresponding to the respective grooves of the pair.

In any of the manufacturing methods described above, when the method is implemented for one sensor chip, productivity is low, and a difference in the distance between the substrate and the cover layer varies for each sensor chip. As a result, a problem tends to occur such that variance in the volume of the reaction section increases, and variance in measured values increases. Thus, as a preferable method, a single relevant large substrate sheet that becomes a substrate of multiple sensor chips, that is, a substrate in which respective substrates of respective sensor chips are connected is employed, and while multiple pairs of detection section are formed, the above described manufacturing method is performed. Then, multiple sensor chips are formed on a single substrate sheet, and thereafter, the sheet is cut into individual sensor chips. By using this method, productivity is improved, and multiple sensor chips can be manufactured following one series of steps, so that a variance in the volume of the reaction section, etc., can be prevented.

According to this method, multiple pairs of detection sections are formed and arranged in parallel in the direction of the fold line. Further, the substrate has a size and a shape that can form multiple pairs of detection sections so as to be arranged in parallel in the direction of the fold line. Furthermore, the size of a sheet layer, the position at which the agent is applied, etc., correspond to this size. When the lamination of the sheet layer, application of the agent, and then folding of the substrate, as described above, are performed with respect to one substrate sheet where multiple pairs of detection section are formed, a laminated body is obtained wherein multiple sensor chips are arranged and connected in parallel in the direction of the fold line.

By cutting this laminated body along one or a plurality of straight lines perpendicular to the fold line, the respective sensor chips are separated, and multiple sensor chips can be obtained. Cutting is so performed that at least one pair of detection sections is included in each cut-out sensor chip. That is, the present invention provides a sensor chip manufacturing method wherein the detection section formed on the substrate includes multiple pairs of detection sections arranged in parallel in a direction of the fold line, and
the manufacturing method further comprising:
cutting a formed laminated body 2 along one or a plurality of straight lines perpendicular to the fold line, so that at least one pair of detection sections is included in each sensor chip.

According to this multiple sensor chip manufacturing method, the cutting of individual sensor chips performed after the folding step and the sheet layer adhering step. By this method, dust produced during the cutting can be prevented from entering the reaction sections as a foreign substance. Additionally, since the folding step can be performed at one time, the method is relatively profitable for productivity. Further, in the multiple sensor chip manufacturing method, it is preferable that the agent application portions at the grooves or at positions corresponding to the grooves are provided linearly. Through this arrangement, for the same reason as given above, the coating machine can be operated easily, and the nozzle can be smoothly moved within a minimum moving distance. Therefore, economical manufacturing is available.

It should be noted, as another method providing higher productivity, a method can also be employed in which a plurality of sets of multiple detection sections arranged in parallel in the direction of a fold line is formed on one substrate sheet, in a direction perpendicular to the fold line, sheet layer lamination and groove formation are performed for these sets in the same manner as described above, agent application is also performed in the same manner as described above, thereafter, the individual sets are separated by cutting the substrate sheet in the direction of the fold line, then folding is performed for each set, and is then cut to obtain individual sensor chips.

The present invention provides a sensor chip manufactured using the above described manufacturing method. That is, the present invention pertinent to this sensor chip. This sensor chip is employed, especially as a biosensor chip, preferably as a blood sugar level sensor that measures the glucose level (blood sugar level) of blood, a urine sugar level sensor that measures a urine sugar level, etc. Claim 9 is pertinent to this preferred aspect, and provides the above described sensor chip wherein the chip is a biosensor chip. Advantages of the Invention

The structure of the sensor chip of the invention is symmetrically formed by using the central plane in a lamination as an axis. As a result, a reliable sensor chip can be obtained wherein warping in the cross-sectional direction does not occur, the external appearance is satisfactory, and surface peeling of the pressure sensitive adhesive material, etc., or variances in measurement values do not occur. Especially, the sensor chip can be appropriately employed as a biosensor chip such as a blood sugar level sensor. According to the sensor chip manufacturing method of the invention, such an excellent sensor chip can be easily manufactured.

Furthermore, in the sensor chip of this invention which includes a substrate, a cover layer and a space layer sandwiched between the substrate and the cover layer, the substrate and the cover layer are integrated, and the positional relationship of the two is fixed securely. Therefore, when a pressure sensitive adhesive material is employed for adhering the individual layers, etc., the distance between the substrate and the cover layer does not change, and the volume of the reaction section due to time-transient changes, changes in the environmental temperature and humidity, etc., rarely changes. Since the volume of the reaction section is thus stabilized, the measurement results obtained based on these conditions are also stabilized, and are very reliable.

Additionally, by using the manufacturing method of the invention, the sensor chip of the invention can be easily manufactured. Especially according to the method in which multiple sensor chips are formed on one substrate sheet, and individual sensor chips are thereafter obtained by cutting the substrate sheet, sensor chips can be accurately and economically manufactured. The sensor chips obtained in this manner are appropriate for use as biosensor chips such as blood sugar level sensors.

Moreover, by using the manufacturing method of the invention, a lamination type sensor chip, wherein a spacer layer is sandwiched between the substrate and the agents are arranged on the upper and lower faces of a hollow reaction section formed between the substrate, can be obtained in high productivity. That is, according to the manufacturing method of the invention, the agents can be applied to both faces of the hollow reaction section in a single process, the deterioration of productivity due to the application of a agent in two positions, which is a conventional problem, does not occur.

### Brief Description of the Drawings

[Fig. 1] An explanatory diagram showing an example of a sensor chip according to the present invention and a manufacturing method therefor.
[Fig.2] An explanatory diagram showing another example of the sensor chip according to the present invention and the manufacturing method therefor.
[Fig. 3] An explanatory diagram showing other example of a manufacturing method of the sensor chip according to the present invention.
[Fig. 4] A schematic cross-sectional view showing an example of a sensor chip according to the present invention.
[Fig. 5] A plan view showing one step of an example of a manufacturing method according to the present invention.
[Fig. 6] A side view showing one step of the example of a manufacturing method according to the present invention.
[Fig. 7] A side view showing one step of the example of a manufacturing method according to the present invention.
[Fig. 8] A side view showing one step of another example of a manufacturing method according to the present invention.
[Fig. 9] A plan view showing a substrate used for the manufacturing method of the present invention.
[Fig. 10] A side view showing the substrate used for the manufacturing method of the present invention.
[Fig. 11] A plan view showing one step of the manufacturing method of the present invention.
[Fig. 12] A plan view showing one step of the manufacturing method of the present invention.
[Fig. 13] A side view showing one step of the manufacturing method of the present invention.
[Fig. 14] A side view showing a biosensor chip according to the present invention.

### Description of Reference Numerals and Signs

- 1, 1', 21:: substrate sheet
- 2, 22:: electrode
- 3, 3', 3", 23:: pressure sensitive adhesive material
- 4, 4':: spacer member
- 24;: resist member (spacer member)
- 5, 5' , 25:: groove
- 6, 26:: agent
- 7, 27:: hollow reaction section
- 9, 29:: central plane
- 28:: fold line
- 101:: substrate sheet
- 102:: substrate
- 103:: cover layer
- 104:: spacer member
- 105, 151, 152:: pressure sensitive adhesive material
- 105':: UV curing resin
- 106:: spacer layer
- 107, 107':: electrode
- 108:: agent
- 109:: hollow reaction section
- 109':: groove
- 110:: fold line
- 201:: substrate
- 202, 202':: electrode
- 203:: fold line
- 204:: sheet layer
- 205, 205':: groove
- 206, 206' :: agent
- 207:: pressure sensitive adhesive material
- 208:: spacer layer
- 209:: hollow reaction section
- 210:: line

### Best Modes for Carrying Out the Invention

The best mode for carrying out the invention will now be described in detail while referring to drawings. It should be noted that the present invention is not limited to this mode, and can be modified so as to employ another mode as long as not departing from the subject of the present invention.

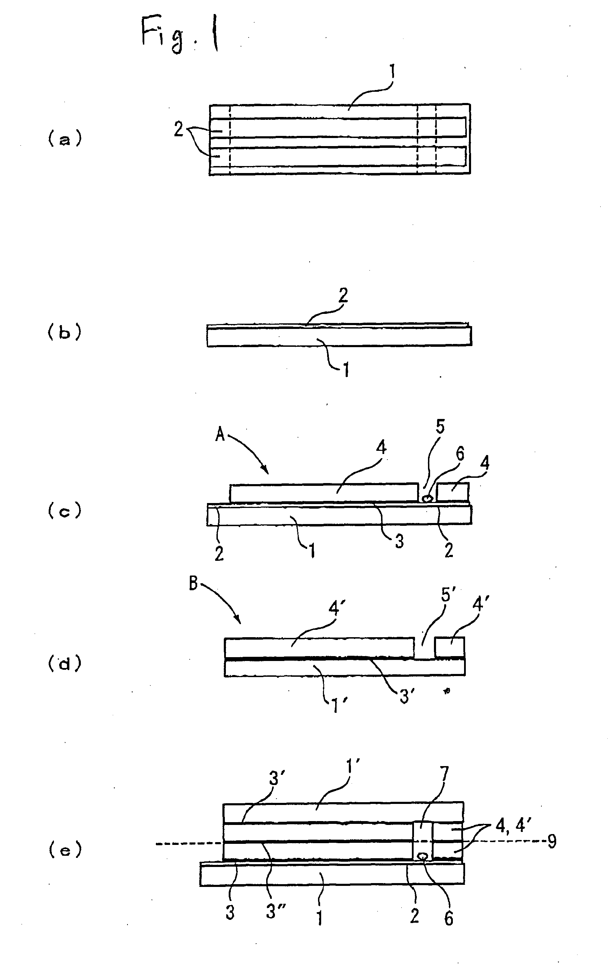

Fig. 1 illustrates one mode of a sensor chip and a manufacturing method therefor according to the present invention. Fig. 1 (a) is a plan view showing the state wherein electrodes 2 (detection sections) are formed on a substrate sheet 1. In this example, electrodes 2 are formed of two electrodes, and respectively correspond to a working electrode and a counter electrode. Fig. 1 (b) is a side view showing the state wherein the electrodes 2 are formed on the substrate sheet 1. In this example, the electrodes 2 are formed of carbon ink, and formed on the substrate sheet 1 made of PET by screen printing. It should be noted that broken lines in Fig. 1(a) indicate positions corresponding to spacer members to be adhered later. Therefore, two broken lines on the right indicate the positions corresponding to a groove, i.e., corresponding to a hollow reaction section that is to be formed later.

Following this, a pressure sensitive adhesive material 3 which is rubber pressure sensitive adhesive material is applied to the substrate sheet 1 and the electrodes 2 by screen printing, and a space member 4 made of PET is adhered from above. Thus, a laminated body A shown in Fig. 1 (c) is obtained. The spacer member 4 has a groove 5, and the electrodes 2 are included in the groove 5. Further, in this example, an agent 6 is applied to the electrodes 2 in the groove 5. The sheet layer of the laminated body A is formed of the pressure sensitive adhesive material 3 and the spacer member 4.

On the other hand, on a substrate sheet 1' that is made of the same material and that has the same thickness as the substrate sheet 1, a pressure sensitive adhesive material 3' having the same composition as the pressure sensitive adhesive material 3 is applied so as to have the same thickness as that of the pressure sensitive adhesive material 3. Additionally, a spacer member 4' which includes a groove 5' and is made of the same material and has the same thickness as the spacer member 4 is adhered, and a laminated body B shown in Fig. 1 (d) is obtained. The sheet layer of the laminated body B is formed of the pressure sensitive adhesive material 3' and the spacer member 4'. A laminated body may be formed by applying a pressure sensitive adhesive material and adhering a spacer member to a single substrate sheet, and by cutting the obtained laminated body substantially equally in two, the obtained laminated bodies may be regarded as the laminated bodies A and B described above.

The laminated bodies A and B obtained in this manner are laminated by adhering the spacer members 4 and 4' by using a pressure sensitive adhesive material 3", and a sensor chip of this invention shown in Fig. le is obtained. The pressure sensitive adhesive martial 3" is formed on either the spacer member 4 or the spacer member 4' by screen printing. This sensor chip includes: a substrate formed of the substrate sheet 1; a cover layer formed of the substrate sheet 1' ; and a spacer layer formed of the spacer members 4, 4' and the pressure sensitive adhesive materials 3, 3', 3", and has a symmetrical structure with respect to a central plane 9 as an axis. Therefore, warping due to the elapse of time, etc., does not occur. In this sensor chip, a hollow reaction section 7 is formed by aligning grooves 5 and 5'. A sample is introduced into this portion, a reaction is induced and is detected by the electrodes 2, whereafter the detection signal is externally output by the electrodes 2.

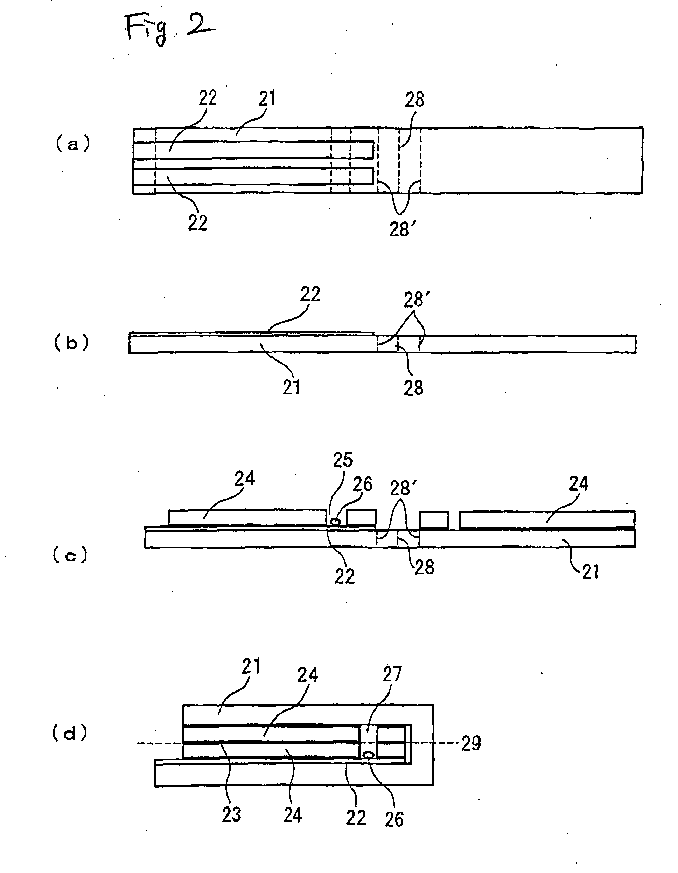

Fig. 2 illustrates another mode of a sensor chip and a manufacturing method therefor according to the present invention. Fig. 2 (a) is a plan view showing the state wherein electrodes 22 (detection section) are formed on a substrate sheet 21 made of PET. In this example, the electrodes 22 are formed on only one side of a fold line 28 that divides the substrate sheet 21 substantially equally in two. As well as in the above example, the electrodes 22 are formed of carbon ink, and formed on the substrate sheet 21 made of PET by screen printing. Further, the electrodes 22 are formed of two electrodes, and respectively correspond to a working electrode and a counter electrode. Broken lines in Fig. 2 (a) indicate positions corresponding to resist members (spacer members) to be formed by application and curing. Fig. 2 (b) is a side view showing the state wherein the electrodes 22 are formed on the substrate sheet 21.

Following this, on the substrate sheet 21 and the electrodes 22, a resist member 24 made of a thermosetting epoxy resin is applied by screen printing, and is thereafter cured, and a laminated body shown in Fig. 2 (c) is obtained. As shown in Fig. 2 (c), the application and curing of the resist member 24 is performed on both sides of the fold line 28. The resist member 24 has a pair of grooves 25 at symmetrical positions with respect to the fold line 28 as an axis, and the electrodes 22 are included in the groove 25 located on the left side of the fold line 28. In this example, an agent 26 is further applied to the electrodes 22 in the groove 25. The pair of grooves 25 in this example is in parallel to each other and shaped linear.

Next, by screen-printing, a pressure sensitive adhesive material 23 which is an acrylic solvent pressure sensitive adhesive is applied to at least one side of the fold line 28 on the resist member 24. Thereafter, the substrate sheet 21 is folded over along two parallel straight lines 28' that are located at equal distances from the fold line 28, and the portions of the resist member 24 are adhered by the pressure sensitive adhesive material 23. Thus, the sensor chip of the invention shown in Fig. 2 (d) is obtained, having a spacer layer formed of the resist member 24 and the pressure sensitive adhesive material 23 used for adhering the portions of the resist member 24 inside the substrate sheet 21 that is folded so as to be U-shaped in cross section. The pair of grooves 25 is aligned and forms a hollow reaction section 27. Since this sensor chip has a symmetrical structure with respect to a central plane 29 as an axis, warping due to the elapse of time does not occur. Further, according to this manufacturing method, the resist member 24 is applied for one layer on one substrate sheet 21, the pressure sensitive adhesive material 23 is applied only on one side thereof, and the substrate sheet 21 is folded for adhering. Thus, the spacer layer can be formed by performing only one process, and a condition according to which the same material and the same thickness are required can be easily satisfied. Therefore, by using this method, a desired chip can be manufactured extremely economically and accurately.

By using a substrate sheet that employs the length corresponding to the long side in the plan view in Fig. 1 (a) or Fig. 2 (a) as a short side, forming multiple pairs of electrodes in parallel to the short side, performing the process described above for the entire face of the substrate sheet, and thereafter, cutting the substrate sheet along the short side so that one pair of electrodes is included respectively. Then, multiple sensor chips can be manufactured through a series of manufacturing steps. Here, one pair of electrodes is a pair of electrodes that can constitute one sensor chip, and includes at least two electrodes, i.e., a working electrode and a counter electrode.

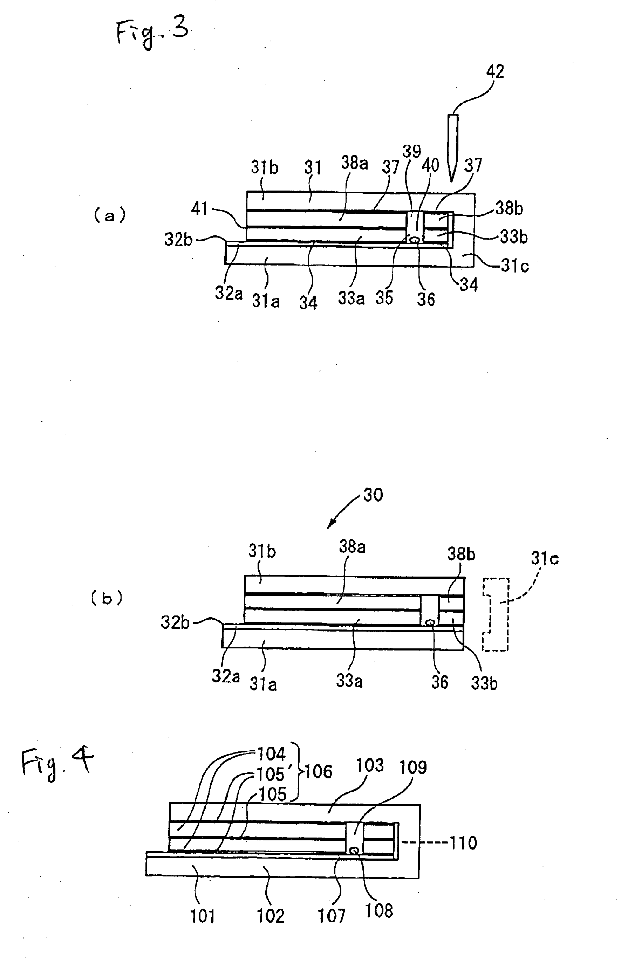

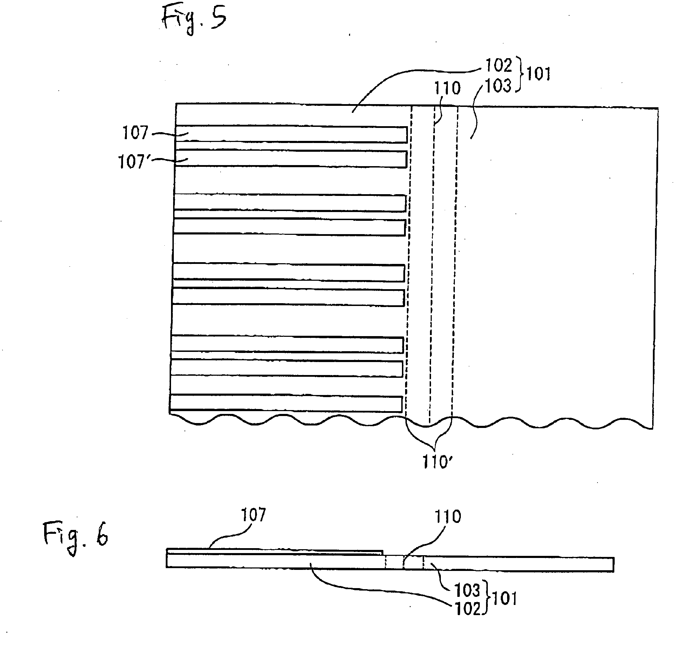

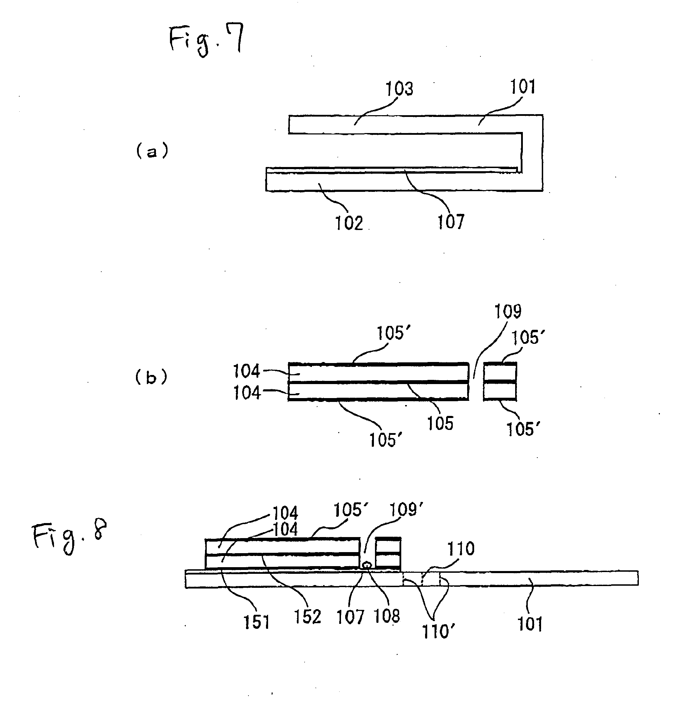

Furthermore, the sensor chip of the invention can be manufactured by folding one substrate sheet and thereafter by cutting the ridge portion of the substrate sheet that has been folded. Fig. 3 illustrates other mode of a sensor chip of this invention. Fig. 3(a) is a side view showing the state wherein a sheet substrate has been folded. A substrate sheet 31 is folded, i.e., is formed of a lower substrate sheet (substrate) 31a, an upper substrate sheet (cover layer) 31b and a ridge portion 31c at the folding portion, and is substantially U-shaped in cross section. Two electrodes (detection sections) -32a, 32b are formed on the lower substrate sheet 31a, and a lower, long spacer 33a and a lower, short spacer 33b are adhered to the electrodes 32a, 32b by a pressure sensitive adhesive material 34. A groove 35 is formed between the lower long spacer 33a and the short spacer 33b, and in the groove 35, an agent 36 is applied to the electrodes 32a, 32b. On the upper substrate sheet 31b, a pressure sensitive adhesive material 37 is applied at positions corresponding to the lower two spacers (spacer layers) 33a, 33b, and an upper long spacer 38a and a short spacer 38b are adhered. A groove 39 is formed between the upper two spacers (spacer layers) 38a, 38b, and a hollow reaction section 40 is formed by the upper and lower two grooves 39, 35. The upper long and short spacers 38a and 38b are adhered to the lower long and short spacers 33a and 33b by a pressure sensitive adhesive material 41 by facing each other. A method shown in Fig. 2 can be employed as an example of a manufacturing method by folding a single substrate sheet. Furthermore, according to this mode, the spacers, each formed of one layer, are adhered; however, a plurality of spacers may be laminated, and in this case, it is preferable that the same number of layers be laminated for the upper and the lower spacers in order to obtain equal thicknesses.

Sequentially, the ridge portion 31c is removed by cutting. First, as shown in Fig. 3(a), a movable cutting blade 42 is moved near the position between the portion where the upper and lower short spacers 33b, 38b are laminated and the ridge portion 31c, in the laminated direction. Then, the cutting blade 40 is moved from the upper substrate sheet 31b toward the lower substrate sheet 31a, and as shown in Fig. 3 (b), the ridge portion 31c of the substrate sheet 31 is cut off and removed, and a sensor chip 30 according to this invention is obtained. Generally, at the ridge portion, residual stress which acts in the direction in which the upper and lower substrate sheets are to be separated is present, because a single substrate sheet has been folded. In this invention, since the ridge portion is cut off, a step of removing the residual stress at the ridge portion can be eliminated, and a sensor chip can be easily manufactured.

According to the sensor chip of this invention, the residual stress can also be removed by heating the ridge portion of one substrate sheet that has been folded. As shown in Figs. 2(a) to (d) or Fig. 3(a), after folding the substrate sheet 31, the ridge portion 31c is heated by a heating unit such as a hot plate. By using this heating unit, the residual stress can be removed (or reduced). When the heating temperature and a heat application period (a short time) of the ridge portion are controlled, the residual stress can be removed without adversely affecting the agent.

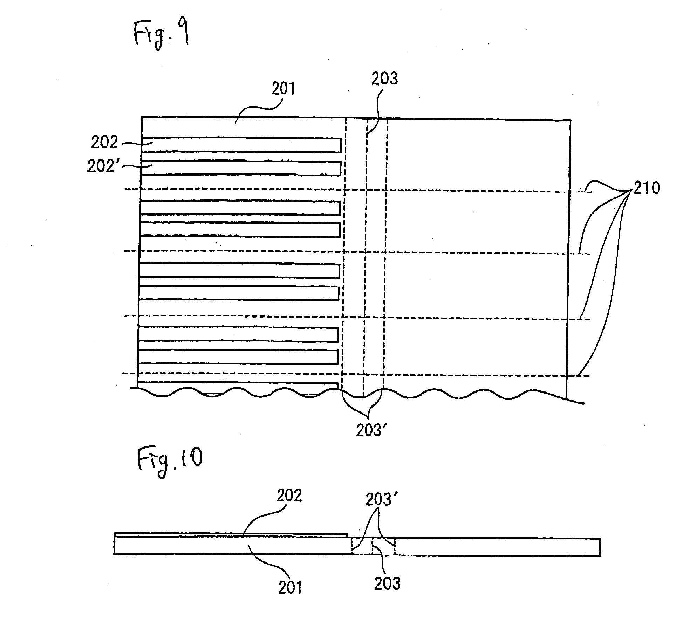

Fig. 4 is a schematic cross-sectional view showing an example sensor chip according to the present invention. The sensor chip in this example has a spacer layer 106 sandwiched between a substrate 102 and a cover layer 103. The spacer layer 106 is formed by laminating two spacer members 104 by a pressure sensitive adhesive material 105, and has a hollow reaction section 109 formed at one end thereof. The spacer layer 106 is adhered to the substrate 102 and to the cover layer 103 by an adhesive of a UV curing resin 105'.

The substrate 102 and the cover layer 103 are formed of a single substrate sheet 101. Along a fold line 110, which divides the substrate sheet 101 substantially equally in two, the substrate sheet 101 is folded over in a U shape, and one side of the fold line 110 becomes the substrate 102, while the other side becomes the cover layer 103.. Therefore, as shown in Fig. 4, the substrate 102 and the cover layer 103 are connected at the end closer to the hollow reaction section 109 and formed integrally. Electrodes 107 (detection section) are formed on the substrate sheet 101 and are exposed inside the hollow reaction section 109, and an agent 108 is applied to the electrodes 107 in the hollow reaction section 109.

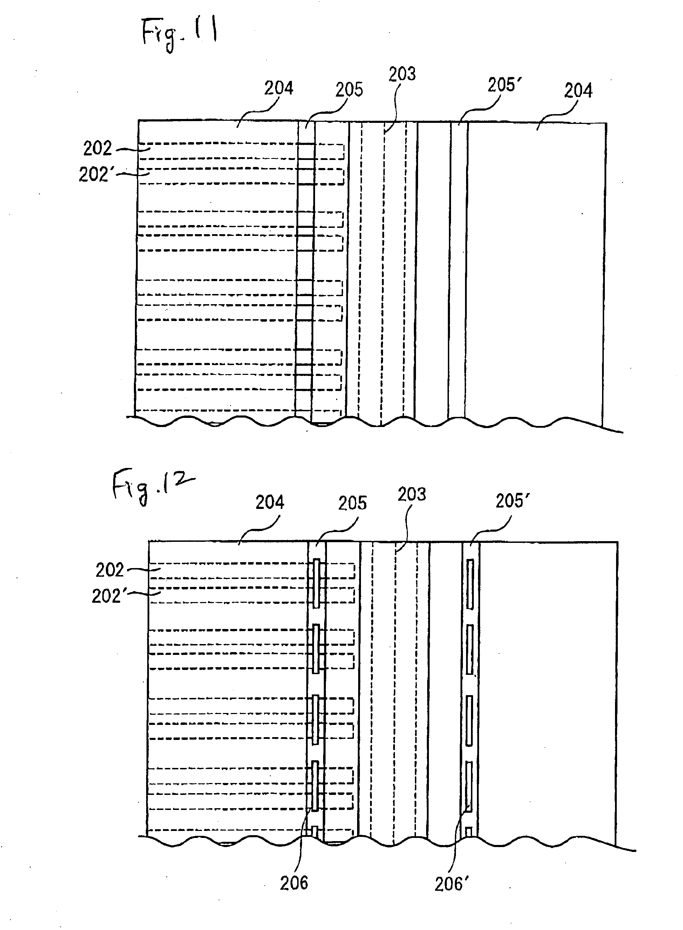

Fig. 5 is a plan view showing the state wherein a plurality of pairs of electrodes 107, 107' (detection sections) are formed on a substrate sheet 101. In this example, one pair of electrodes 107, 107' are formed of two electrodes corresponding to a working electrode and a counter electrode. Fig. 6 is a side view showing the state wherein the electrode 107 is formed on the substrate sheet 101. In this example, the electrode 107 is formed of carbon ink, and formed on the substrate sheet 101 made of PET by screen printing. Furthermore, as shown in Figs. 5 and 6, in this example, the electrode 107 is formed on only one side of a fold line 110 on the substrate 102, and is not formed on a cover layer 103.

An example of a manufacturing method according to this invention will now be described. In Fig. 7(a), a laminated body, wherein the electrode 107 is formed on the substrate sheet 101 shown in Figs. 5, 6, is folded along two lines 110' which are in parallel to the fold line 110 and are located at equal distances from the fold line 110, is formed in a U-shape. The substrate sheet 101 is made of PET and this formation is thermally performed at a temperature of 160 to 250°C. Thereafter, to remove the residual stress, the folding portion is heated at the same temperature. For this thermal process, the ridge portion which is folded in a U-shape is brought into contact with a hot plate, and is held for one to two seconds.

On the other hand, two spacer members 104 having a groove are adhered by a pressure sensitive adhesive material 105, and thus, a spacer layer having a groove 109 as shown in Fig. 7 (b) is obtained. A UV curing resin 105' is applied to both faces of this spacer layer, and the spacer layer is inserted into the U-shaped molded body shown in Fig. 7(a). For smooth insertion, the gap between the substrate sheet 101 and the cover layer 103 is widened, and thereafter is closed by the flexibility inherent to PET, and after adhesion, the UV curing agent 105' is cured by UV irradiation and bonded. Following this, the agent is introduced into the hollow reaction section 109, and the sensor chip shown in Fig. 4 is obtained.

Fig. 8 is an explanatory diagram showing one step of another manufacturing method according to the present invention. In this example, before a substrate sheet 101 is folded, two spacer members 104 are laminated on one side of a fold line 110 by pressure sensitive adhesive materials 151, 152. This lamination can also be performed by screen printing. In this case, a spacer member is directly applied to the substrate sheet and is cured, and the pressure sensitive adhesive material is used only for the topmost layer.

Since the spacer members 104 have grooves, a groove 109' which serves as a hollow reaction section 109 is formed by lamination. An agent 108 is applied to an electrode 107 exposed inside the groove 109'. Further, a UV curing resin 105' is applied to the topmost spacer member 104, and then, at a normal temperature, a substrate sheet 101 made of PET is folded to be U-shaped, along two lines 110' that are in parallel to a fold line 110 and are located at equal distances from the fold line 110. The thermal process is then performed for the folding portion in order to remove residual stress.

After the substrate sheet has been folded at normal temperature, while maintaining the folding state, the thermal process is performed by placing the folded ridge portion into contact with the hot plate, of which surface temperature is 200°C, and by holding that state for one second. From the viewpoints of both the productivity and the prevention of an adverse affect by heat, the use of a hot plate is useful because local heating is easily enabled and a short heating application period is required. It is preferable that the agent 108 be applied at a position 5 mm or further separate from the portion whereat the hot plate is placed in contact. As long as the agent 108 is separate for 5 mm or further, when the thermal process is performed under the above conditions, the temperature at the portion whereat the agent 108 has been applied does not rise to 60°C or higher. In a case where the agent 108 is a low heat resistant enzyme, deterioration of the enzyme by heat does not occur.

The substrate sheet 101 and the spacer member 104 are adhered by folding the substrate sheet 101 to be U-shaped. Then, adhesion is performed by curing the UV curing resin 105' on the spacer member 104 by UV irradiation, and the sensor chip of this invention is obtained.

It should be noted that in the above example, a rubber pressure sensitive adhesive material, an acrylic pressure sensitive adhesive material, a silicon pressure sensitive adhesive material, etc., can be employed as the pressure sensitive adhesive materials 105, 151, 152. PET, etc., can be employed as the spacer member 104. A urethane resin, an epoxy resin, a denatured polyimide resin, an acrylic resin, etc., can be employed as a spacer member that is formed by screen printing.

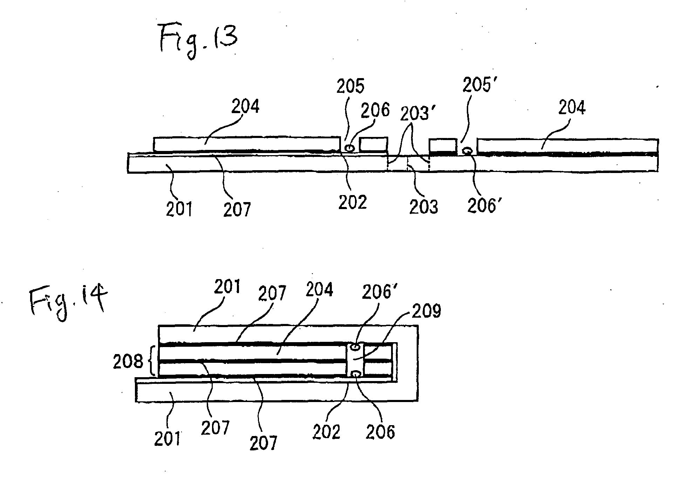

The following example is an example of a manufacturing method of this invention for manufacturing multiple sensor chips through a series of steps, by employing a substrate on which multiple pairs of electrodes (detection sections) are formed. Fig. 9 is a plan view showing the state wherein a plurality of pairs of electrodes 202, 202' (detection sections) are formed on a substrate 201. In this example, one pair of electrodes 202, 202' are formed of two electrodes-, and respectively correspond to a working electrode and a counter electrode. Fig. 10 is a side view showing the state wherein the electrode 202 is formed on the substrate 201. In this example, the electrodes 202, 202' are formed of carbon ink, and formed on the substrate 201 made of a PET resin by screen printing. The formation of electrodes may also be performed by a method other than screen printing, e.g., a method such as adhering a metallic tape to a substrate.

Dotted lines in Figs. 9 and 10 indicate a fold line 203 that divides the substrate 201 substantially equally in two, and two lines 203' that are in parallel to the fold line 203 and are located at equal distances from the fold line 203. As shown in Figs. 9 and 10, in this example, electrodes 202, 202' are formed only at one side of the fold line 203.

A sheet layer 204 is laminated on the substrate shown in Figs. 9 and 10. Fig. 11 is a plan view showing the state after the sheet layer 204 is laminated. Two linear grooves 205, 205' which are located at equal distances from the fold line 203 and are in parallel to the fold line 203 are formed in the sheet layer 204. The sheet layer 204 having the grooves 205, 205' is formed by applying a resin to the substrate by screen printing. A resin to be applied by screen printing can - be a urethane resin, an epoxy resin, a denatured polyimide resin, an acrylic resin, etc.

According to the method of performing screen printing of the resin to the substrate, it is preferable for productivity, because the sheet layer can be laminated by a single application. Further, the positions and shapes of the grooves 205, 205' can be easily changed simply by changing the print plate. The sheet layer 204 serves as a spacer for the formation of a sensor chip, and also serves to reduce variance in detection by the sensor by masking the surface of the electrode for a predetermined area so as to make the electrode area constant, so the sheet layer 204 is generally called a resist layer. Upon laminating the sheet layer 204, a pressure sensitive adhesive material, an adhesive, etc., that has as a function of bonding both faces when the folding is performed, may be applied by screen printing. A rubber pressure sensitive adhesive material, an acrylic pressure sensitive adhesive material, a silicon pressure sensitive adhesive material, etc., can be employed as a pressure sensitive adhesive material to be applied by screen printing. Further, an epoxy adhesive, a vinyl acetate adhesive, a silicon adhesive, etc., can be employed as an adhesive.

Following this, a coating machine such as a dispenser having-two nozzles applies an agent to the grooves 205, 205. The two nozzles correspond to the positions of the grooves 205, 205', and since the grooves 205, 205' are extended along two parallel straight lines, the two nozzles need simply be moved in parallel, so that through a single process, the application of the agent can be easily performed for the entire lengths of the two grooves. That is, according to this invention, based on the fact that two faces are present on the same plane, an agent can be applied to both grooves in the lower and upper faces by the same process by using a coating machine. It should be noted that one nozzle may be employed to apply an agent to both grooves. However, economically it is preferable, because when two nozzles are provided for the lower face and the upper face in one coating machine, application to grooves in both faces can be performed in the same application period as in a case where the agent is applied to the groove in one face. By employing different agent supply lines for two nozzles, i.e., by supplying different agents to the individual nozzles, different agents can be applied to the grooves 205, 205' . Figs . 12 and 13 are a plan view and a side view respectively showing states after agents 206, 206' have been applied.

It should be noted that in this example, the agents 206, 206' are applied after grooves 205, 205' have been formed. After the agents 206, 206' have been applied, the grooves 205, 205' may be formed so as to contain the agents inside. However, the method of performing the application of the agent after the grooves 205, 205' have been formed is preferable, because the positioning for the application and the managing of the application amount are easier.

After the agent has been applied, a substrate 201 is folded over along a fold line 203. In this example, the substrate 201 is folded along two lines 203' which are in parallel to the fold line 203 and are located at equal distances from the fold line 203 and formed to be U-shaped in cross section. Fig. 14 is a side view of the folded state. The folding can be performed at normal temperature; however, preferably, after the substrate has been folded, the thermal process is performed on the folding portion in order to remove residual stress.

It is generally preferable that the temperature used for the thermal process for thermoplastic resin be equal to or higher than the middle of the resin softening temperature (glass transition temperature) and the melting point, and equal to or lower than the melting point. When the thermal process temperature is lower than the middle of the resin softening temperature and the melting point, the residual stress of the folding portion is not appropriately removed, and the folding portion may be changed as time elapses. On the other hand, when the thermal process temperature exceeds the melting point, deformation of the resin is increased, and a smooth folding face may not be maintained. Since the resin softening temperature of a PET resin is about 70°C and the melting point is about 250°C, it is preferable that for a substrate sheet made of a PET resin, the thermal process temperature of the folding portion to be equal to or higher than 160°C and equal to or lower than 250°C. A typical PET resin can be Melinex or Tetoron (product name, manufactured by Teij in DuPont Films Japan, Ltd.), Lumirror (product name, Toray Industries Inc.), etc.

On the other hand, since an enzyme such as GOD or GDH may be deteriorated at a temperature of 60°C or higher, it is preferable that for a biosensor chip that employs this enzyme, a process such as adjusting the thermal process temperature and separating the hollow reaction section from the fold line by an appropriate distance be performed, so that the settling portion of the enzyme is not equal to or higher than 60°C.

In the case for this mode wherein the substrate 201 is made of a PET resin, the following method is employed as an example preferred mode. After the substrate sheet has been folded at normal temperature, while maintaining the folding state, the thermal process is performed by placing the folded ridge portion into contact with the hot plate, of which surface temperature is 200°C, and by holding that state for one second. From the viewpoints of both the productivity and the prevention of an adverse affect by heat, the use of a hot plate is useful because local heating is easily enabled and a short heating application period is required. It is preferable that the agent 108 be applied at a position 5 mm or further separate from the portion whereat the hot plate is placed in contact. As long as the agent 108 is separate for 5 mm or further, when the thermal process is performed under the above conditions, the temperature at the portion whereat the agent 6 has been applied does not rise to 60°C or higher. In a case where the agent 6 is a low heat resistant enzyme, deterioration of the enzyme by heat does not occur.

After being folded, the folded sheet layer 204 is adhered by a pressure sensitive adhesive material 207 so as to form a spacer layer 208. As described above, a rubber pressure sensitive adhesive material, an acrylic pressure sensitive adhesive material, a silicon pressure sensitive adhesive material, etc., can be employed as the pressure sensitive adhesive material 207. The grooves 205, 205' are also aligned to form a hollow reaction section 209, and the agents 206, 206' are applied to the lower and upper faces. When the thus obtained laminated body is cut along lines (lines 210 in Fig. 9) perpendicular to the fold line 203, multiple individual sensor chips having the side view shown in Fig. 14 are obtained. The cutting process is performed so that at least one pair of electrodes is included in each of the sensor chips.

## Claims

1. A sensor chip, comprising:
a substrate;
a cover layer;
a spacer layer sandwiched between the substrate and the cover layer;
a hollow reaction section provided between the substrate and the cover layer; and
a detection section provided in the hollow reaction section,
wherein the substrate and the cover layer are made of the same material and have the same thickness, and
a material and a shape of the spacer layer are symmetrical with respect to a plane which is parallel to the substrate and located at equal distances from the substrate and from the cover layer.

2. A sensor chip according to claim 1, wherein the spacer layer is formed by adhering a pair of sheet layers together which has a groove and is made of a spacer member of a single layer or multiple layers,
each of the pair of sheet layers is made of the same material and has the same thickness, and
the pair of sheet layers is adhered together so as to be symmetrical with respect to the plane.

3. A sensor chip according to claim 2, wherein after a laminated body is formed by laminating a sheet layer on a substrate sheet serving as the substrate and the cover layer, the sheet layer having a pair of grooves that are symmetrical with respect to a fold line which serves as an axis, the fold line dividing the substrate sheet substantially equally in two, so that at least one of the grooves includes the detection section therein,
the laminated body is folded over along the fold line so that the pair of grooves aligns with each other so as to form the hollow reaction section, and
portions of the sheet layer are adhered together, thereby the sensor chip is obtained.

4. A sensor chip according to claim 3, wherein the pair .. of grooves is parallel to each other and is shaped linear.

5. A sensor chip according to one of claims 1 to 4, wherein the sensor chip is a biosensor chip.

6. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate or the cover layer; and
adhering a laminated body 1 and a laminated body 2 so that sheet layers of both the laminated body 1 and the laminated body 2 face each other, and grooves of both the sheet layers align with each other, thereby forming the hollow reaction section,
wherein the laminated body 1 is obtained by forming the sheet layer which has a groove and is made of a spacer member of a single layer or multiple layers, so that the detection section is included in the groove, and
the substrate sheet and the sheet layer of the laminated body 2 are made of the same material, and have the same thicknesses and the same formation as those of the laminated body 1.

7. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate and the cover layer;
forming a laminated body by laminating a sheet layer having a pair of grooves which are symmetrical with respect to a fold line that serves as an axis, so that at least one of the grooves includes the detection section therein, the sheet layer being a laminated body of a spacer member or multiple spacer members, and the fold line dividing the substrate sheet substantially equally in two;
folding the laminated body over along the fold line after forming the laminated body so that the sheet layers face each other; and
adhering the sheet layers together.

8. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate and the cover layer;
forming a spacer layer respectively on the substrate and the cover layer, the spacer layer being a laminated body of a spacer member or multiple spacer members, and forming a groove respectively in the spacer layers so as to have the detection section in at least one of the grooves;
adhering the spacer layers together by folding the substrate sheet over, and forming the hollow reaction section by the grooves facing each other; and
removing a folding portion of the substrate sheet after adhering the spacer layers together and forming the hollow reaction section.

9. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section on a substrate sheet serving as the substrate and the cover layer ;
forming a spacer layer respectively on the substrate and the cover layer, the spacer layer being a laminated body of a spacer member or multiple spacer members, and forming a groove respectively in the spacer layers so as to have the detection section in at least one of the grooves;
adhering the spacer layers together by folding the substrate sheet over, and forming the hollow reaction section by the grooves facing each other; and
heating a folding portion of the substrate sheet after adhering the spacer layers together and forming the hollow reaction section.

10. A sensor chip, comprising :
a substrate;
a cover layer;
a spacer layer sandwiched between the substrate and the cover layer;
a hollow reaction section provided between the substrate and the cover layer; and
a detection section provided in the hollow reaction section,
wherein the substrate and the cover layer are connected to each other at one end of the substrate and one end of the cover layer, and are integrally formed.

11. A sensor chip according to claim 10, wherein the substrate and the cover layer are formed by folding one substrate sheet over along a fold line that divides the substrate sheet substantially equally in two.

12. A sensor chip according to claim 10 or 11, wherein the sensor chip is a biosensor chip.

13. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section at least on one side of one substrate sheet and of a fold line that divides the substrate sheet substantially equally in two;
folding the substrate sheet over along the fold line;
inserting a spacer layer having a groove portion between the folded substrate sheet; and
adhering the spacer layer to the folded substrate sheet so as to obtain a laminated body.

14. A manufacturing method of a sensor chip having a substrate, a cover layer, a spacer layer sandwiched between the substrate and the cover layer, a hollow reaction section provided between the substrate and the cover layer, and a detection section provided in the hollow reaction section, the method comprising:
forming the detection section and a spacer layer having a groove portion at least on one side of one substrate sheet and of a fold line that divides the substrate sheet substantially equally in two;
folding the substrate sheet over along the fold line; and
adhering the spacer layer and the other side of the substrate sheet so as to obtain a laminated body.

15. A manufacturing method of a sensor chip according to claim 13 or 14, wherein the substrate sheet is made of thermoplastic resin, and
after the substrate sheet is folded, a thermal process is applied on the folding portion.

16. A manufacturing method of a sensor chip according to one of claims 13 to 15, further comprising:
forming multiple pairs of the detection sections while arranging the detection sections in parallel in a direction of the fold line; and
cutting the obtained laminated body along one or a plurality of straight lines perpendicular to the fold line, so that at least one pair of detection sections is included in each sensor chip.

17. A manufacturing method of a sensor chip having a substrate that is folded, a spacer layer sandwiched between the folded substrate, a hollow reaction section provided between the folded substrate, and a detection section provided in the hollow reaction section, the method comprising:
obtaining a laminated body 1 by laminating a sheet layer on the substrate on which the detection section is formed, the sheet layer having one or more than one pair of grooves that are axisymmetrical with respect to a fold line that serves as an axis, the fold line dividing the substrate substantially equally in two, so that at least one of the grooves includes the detection section;
applying agents to the substrate simultaneously at positions corresponding to each groove of the pair of grooves; and
after the two steps, folding the laminated body 1 over along the fold line and adhering portions of the sheet layer so as to form a spacer layer.

18. A manufacturing method of a sensor chip according to claim 17, wherein the lamination of the sheet layer having more than one pair of grooves that are axisymmetrical with respect to the fold line serving as the axis is performed in one step by applying a resin to the substrate.

19. A manufacturing method of a sensor chip according to claim 17 or 18, wherein the laminated body 1 is obtained by forming the sheet layer having the pair of grooves after applying the agents.

20. A manufacturing method of a sensor chip according to claim 17 or 18, wherein the agents are applied after obtaining the laminated body 1 by forming the sheet layer having the pair of grooves.

21. A manufacturing method of a sensor chip according to one of claims 17 to 20, wherein the grooves of the pair are parallel and are shaped linear.

22. A manufacturing method of a sensor chip according to one of claims 17 to 21, wherein the different agents are simultaneously applied at the positions corresponding to the respective grooves of the pair.

23. A manufacturing method of a sensor chip according to one of claims 17 to 22, wherein the detection section formed on the substrate includes multiple pairs of detection sections arranged in parallel in a direction of the fold line, and
the manufacturing method further comprising:
cutting a formed laminated body 2 along one or a plurality of straight lines perpendicular to the fold line, so that at least one pair of detection sections is included in each sensor chip.

24. A sensor chip being manufactured by the manufacturing method according to one of claims 17 to 23.

25. A sensor chip according to claim 24, wherein the sensor chip is a biosensor chip.
